# EUROPÄISCHE PATENTSCHRIFT

(11) **EP 1 784 279 B1**
(45) Veröffentlichungstag und Bekanntmachung des Hinweises auf die Patenterteilung: **02.11.2011**
(21) Anmeldenummer: 05784472.2
(22) Anmeldetag: 22.08.2005
(51) Int. Cl.: B23K 37/047

(54) **System zum Einbringen oder Montieren von Muttern in Werkstücke durch Verschweißen**
System for placing or mounting of nuts into workpieces by welding
Système pour appliquer ou monter des écrous sur des pièces par soudage

(30) Priorität: 02.09.2004 DE 102004042970
(43) Veröffentlichungstag der Anmeldung: 16.05.2007
(73) Patentinhaber: Schmidt, Heiko, 93138 Lappersdorf (DE)
(72) Erfinder: Schmidt, Heiko, 93138 Lappersdorf (DE)
(74) Vertreter: Graf, Helmut
(86) Internationale Anmeldenummer: PCT/DE2005/001470
(87) Internationale Veröffentlichungsnummer: WO 2006/024266

(56) Entgegenhaltungen:
- DE-A- 3 934 961
- GB-A- 1 371 328
- US-A- 5 007 795

## Beschreibung

- Die Erfindung bezieht sich auf System gemäß Oberbegriff Patentanspruch 1.

Ein System zum Einbringen von Muttern in Werkstücke durch Verschweißen mit den Merkmalen des Oberbegriffs des Patentanspruches 1 ist bekannt GB 1, 371, 328. Bei dem bekannten System werden die Muttern über eine Förderstrecke an eine in einem Gehäuse ausgebildete Ladeposition gefördert und aus dieser Ladeposition mit einem Schieber an eine Setz- oder Schweißstation bewegt. Der Schieber wird hierbei mit der jeweiligen, an der vorderen Stirnfläche des Schiebers gehaltenen Mutter aus dem Gehäuse der Ladevorrichtung heraus an die Schweißstation bewegt, und zwar ohne Führung der Mutter in einem Ladekanal.

Aufgabe der Erfindung ist es, ein System aufzuzeigen, mit dem in besonders zuverlässiger Weise ein Einbringen von Muttern durch Schweißen in Werkstücke möglich ist. Zur Lösung dieser Aufgabe ist ein System entsprechend dem Patentanspruch 1 ausgebildet.

Bei dem erfindungsgemäßen System werden die jeweiligen Muttern von einer Versorgungseinheit über eine beispielsweise flexible äußere Zuführung an die Ladevorrichtung gefördert, und zwar vorzugsweise durch Einschießen mit Druckluft.

Von einer Ladeposition der Ladevorrichtung wird dann jeweils eine Mutter über den Ladekanal dieser Vorrichtung an die Schweißstation bewegt, wo die Mutter durch Schweißen (Widerstandsschweißen) mit dem Werkstück verbunden wird.

In Weiterbildung der Erfindung bzw. des erfindungsgemäßen Systems ist es u.a. auch möglich
dass die Achse der Bewegung des Schiebers unter einem Winkel in die Ladeposition oder einen diese Ladeposition bildenden Kanalabschnitt mündet, und/oder
dass sich der Schieber in einer Ausgangsposition mit seiner Schieberfläche außerhalb des Zuführkanals befindet,
und/oder
dass der Schieber oder dessen Schieberfläche zum Vorbewegen einer an der Ladeposition bereitstehenden Mutter über den Ladekanal an die Schweißstation (3) in den Zuführkanal hineinbewegbar ist,
und/oder
dass der Schieber oder dessen Schieberfläche zumindest in einer zweiten, senkrecht zur ersten Achsrichtung verlaufenden Achse bewegbar ist,
und/oder
dass der Schieber zumindest auf einer Teillänge von einer Kolbenstange einer Kolben-Zylinder-Einheit gebildet ist,
und/oder
dass die Ladeführung und/oder der Schieber aus einem elektrisch nicht leitenden Material bestehen,
und/oder
dass die Ladeführung und/oder der Schieber aus einem nicht magnetisierbaren Material, beispielsweise aus Edelstahl bestehen,
und/oder
dass wenigstens ein Sensor an der Ladeposition vorgesehen ist,
und/oder
dass wenigstens ein Sensor zur Ermittlung wenigstens einer Endstellung des Schiebers vorgesehen ist,
und/oder
dass das Gehäuse als flaches, rechteckförmiges Gehäuse ausgebildet ist, und/oder
dass im Zuführkanal Mittel zum Vereinzeln der Muttern vorgesehen sind, und/oder
dass der Zuführkanal über eine äußere, vorzugsweise flexible Zuführung mit einer Versorgungseinheit für die Muttern verbunden ist.

Die vorgenannten Merkmale können jeweils einzeln oder in beliebigen Kombinationen verwendet sein.

Weiterbildungen der Erfindung sind auch Gegenstand der Unteransprüche. Die Erfindung wird im Folgenden anhand der Figuren an einem Ausführungsbeispiel näher erläutert. Es zeigen:
- Fig. 1: in vereinfachter Darstellung und in Seitenansicht eine Ladevorrichtung zum Zuführen von Schweißmuttern an eine Schweißstation;
- Fig. 2: die Vorrichtung in Draufsicht.

Zur Vereinfachung der Beschreibung sind in den Figuren die drei senkrecht zueinander verlaufenden Raumachsen, nämlich X-Achse, Y-Achse und Z-Achse angegeben.

Die in den Figuren allgemein mit 1 bezeichnete Ladevorrichtung dient zum Zuführen von Schweißmuttern 2 an eine Schweißstation 3, in der diese Muttern mit einem Werkstück, beispielsweise einem Blechteil durch Elektro-Schweißen (Widerstandsschweißen) verbunden werden. Die Muttern 2 werden der Vorrichtung 1 von einer nicht dargestellten Versorgungseinheit über einen Versorgungsschlauch 4 durch Einschießen mit Druckluft zugeführt, wobei die Muttern 2 im Versorgungsschlauch bereits die richtige Orientierung aufweisen.

Die Vorrichtung 1 selbst besteht im Wesentlichen aus einem bei der dargestellten Ausführungsform flachen, langgestreckten Gehäuse 5, welches in Draufsicht rechteckförmig ausgeführt ist und mit seiner Längsachse in der X-Achse, mit seiner Breite in der Y-Achse und mit seiner Dicke in der Z-Achse orientiert ist. Im Gehäuse 5 ist ein Führungskanal 6 ausgebildet, der mit einem Ende an dem Versorgungsschlauch . 4 bzw. an den in diesem Versorgungsschlauch ausgebildeten Kanal 4.1 angeschlossen ist und in dem die Muttern 2 mit ihrer Achse bzw. mit der Achse ihres Muttergewindes in Richtung der Z-Achse und damit senkrecht zu der in der XY-Ebene liegenden Oben- - und Unterseite des flachen Gehäuses 5 orientiert sind.

Der Führungskanal 6 bildet am anderen Ende des Gehäuses 5 an einem Kanalabschnitt . 6.1 eine Ladeposition 7, die jeweils zur Aufnahme einer Mutter 2 dient. An der Ladeposition 7 ist wenigstens eine gefederte Klinke 8 vorgesehen, die die jeweilige, über den Versorgungsschlauch 4 und den Führungskanal 6 eingeschossene Mutter 2 an der Ladeposition 7 zunächst stoppt oder zurückhält. Mit Hilfe eines in Richtung der X-Achse bewegbaren Schiebers 9 bzw. dessen Schieberfläche 9.1 wird dann die jeweils an der Ladeposition bereitstehende Mutter 2 durch Überdrücken der Klinke 8 in den relativ langen, von einer starren Führung 10 gebildenten Ladekanal 10.1 eingeschoben, der sich an die Ladeposition 7 anschließt und einen an die Form der Muttern 2 angepassten Kanalquerschnitt aufweist, und an die Schweißstation 3 durch Weiterschieben bewegt.

Der Ladekanal 10.1 besitzt eine Länge, die um ein Vielfaches größer ist als der doppelte Durchmesser einer Mutter 2. Da bei jeder Vorschubbewegung des Schiebers 9 mit diesem jeweils nur eine Mutter 2 über die Führung 10 der Schweißstation 3 zugeführt wird, ist der Vorschubhub des Schiebers 9 ebenfalls um ein Vielfaches größer als der doppelte Durchmesser einer Mutter 2.

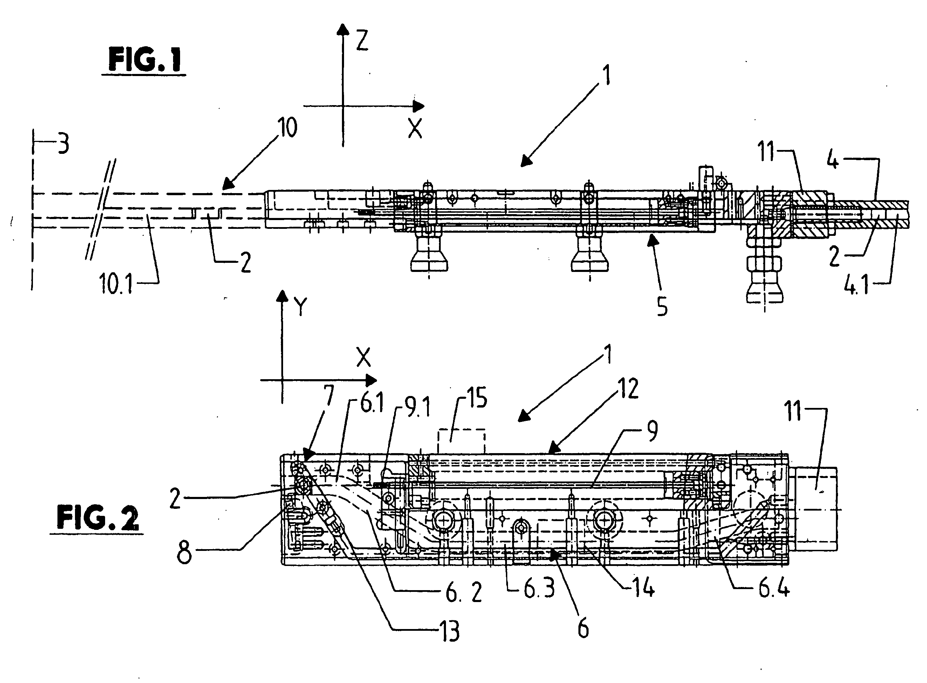

Wie in der Figur 2 dargestellt, befindet sich die Ladeposition 7 mit der Klinke 8 an dem sich in Richtung der X-Achse erstreckenden Kanalabschnitt 6.1. Um die Muttern 2 an dem in seiner zurückgezogenen Ausgangsposition befindlichen Schieber 9 bzw dem in der Ausgangsposition befindlichen Schieberende 9.1 vorbei an die Ladeposition 7 einschießen zu können, bildet der Führungskanal 6 einen Kanalabschnitt 6.2 der seitlich schräg in den Abschnitt 6.1 einmündet, und zwar derart, dass der Abschnitt 6.2 mit der X-Achse einen Winkel kleiner als 90° einschließt, der sich zu dem mit dem Versorgungsschlauch 4 in Verbindung stehenden Ende des Führungskanals 6 hin öffnet.

In den Kanalabschnitt 6.2 mündet ein Kanalabschnitt 6.3, der mit seiner Längserstreckung wiederum in Richtung der X-Achse liegt und in den ein schräg zur X-Achse verlaufender Kanalabschnitt 6.4 einmündet, der über einen Anschluss 11 mit dem Versorgungsschlauch 4 verbunden ist.

Der Schieber 9 ist bei der dargestellten Ausführungsform die mit ihrer Längsachse in der X-Achse orientierte Kolbenstange einer Kolben-Zylinder-Anordnung 12, die in einer Ausnehmung des Gehäuses 5 untergebracht ist. Bei in seiner Ausgangsstellung befindlichem Schieber 9 ist dieser nahezu vollständig im Zylinder der Kolben- - Zylinder-Anordnung aufgenommen. Durch den von den Kanalabschnitten 6.2, 6.3 und 6.4 gebildeten Verlauf des Führungskanals 6 ist es möglich, bei sehr kleiner und kompakter Bauweise sowohl den Führungskanal 6 als auch die Kolben-Zylinder-Anordnung 12 in dem flachen Gehäuse 5 unterzubringen. Die Achsen der Kanalabschnitte 6.1 . 6.4 liegen mit der Achse des Ladekanals 10. und der Längsachse des Schiebers 9 in einer gemeinsamen XY-Ebene.

An der Ladeposition 7 ist ein Sensor 13 vorgesehen, mit dem das Vorhandensein jeweils einer Mutter 2 an dieser Ladeposition überwacht wird.

Bei der dargestellten Ausführungsform wird in jedem Arbeitstakt jeweils eine Mutter 2 über den Versorgungsschlauch 4 und den Führungskanal 6 an die Ladeposition 7 eingeschossen und dann durch Betätigen der Kolben-Zylinder-Anordnung 12 mit dem Schieber 9 von der Ladeposition über die Führung 10 in die Schweißstation 3 eingeschoben.

Um die Taktzeit zu verkürzen, ist es auch möglich, mehrere Muttern 2 durch Einschießen als Vorrat im Führungskanal 6, beispielsweise im Kanalabschnitt 3 bereit zu stellen und dann von dort jeweils eine Mutter 2 in jedem Arbeitstakt über den Kanalabschnitt 6.2 an die Ladeposition 7 zu fördern. Hierfür ist beispielsweise am Kanalabschnitt 6.3 eine Einrichtung mit Schleusenfunktion vorgesehen, wie dies in der Figur 2 ganz allgemein mit 14 bezeichnet ist. Diese Einrichtung 14 ist dabei so ausgebildet, dass bei in seine Ausgangsstellung zurückgekehrtem Schieber 9 jeweils eine Mutter 2 über den Kanalabschnitt 12 in die Ladeposition bewegt wird, und zwar beispielsweise mit einem Luftstrom, der durch eine entsprechende Düse der Einrichtung 14 erzeugt wird.

Da bei vorbewegtem Schieber 9 der Übergang zwischen den Kanalabschnitten 6.2 und 6.1 durch diesen Schieber für die Muttern 2 gesperrt ist, ist es weiterhin auch möglich, die jeweils nächste Mutter 2 bereits in dem Kanalabschnitt 6.2 und seitlich gegen den Schieber 9 anliegend in eine Vorbereitungsposition einzubringen, bevor der Schieber in seiner Ausgangsstellung zurückbewegt ist. Auch hierdurch kann die Taktzeit wesentlich verkürzt werden.

Eine Besonderheit der Vorrichtung 1 besteht darin, dass in jedem Arbeitstakt jeweils eine Mutter 2 von der Ladeposition 7 über die gesamte Länge der Führung 10 an die

Schweißstation 3 bewegt wird. Die Führung 10 besitzt dabei eine Länge, die wesentlich größer ist als der doppelte Durchmesser der Muttern 2, so dass die Funktionselemente der Vorrichtung 1, insbesondere auch die Kolben-Zylinder-Anordnung 12, der Sensor 13 und die Klinke 8 einen ausreichenden Abstand von der Schweißstation 3 aufweisen und Störungen durch den Schweißstrom zuverlässig vermieden sind. Die Führung 10 besteht aus einem nicht ferromagnetischen Material, beispielsweise aus einem isolierenden Material, beispielsweise aus einem geeigneten Kunststoff oder aus Keramik.

Bei der dargestellten Ausführungsform ist die Kolben-Zylinder-Einheit 12 so ausgebildet, dass die jeweilige Mutter 2 aus der Ladeposition 7 über den Ladekanal 10.1 gegen einen in der Schweißstation 3 gebildeten Anschlag bewegt wird. Wird bei einem Bewegungshub des Schiebers 9 mit dem Schieber 9 bzw. dessen Schieberfläche 9.1 keine Mutter 2 in die Schweißstation 3 bewegt, so ergibt sich ein etwas größerer Bewegungshub für den Schieber 9 als beim Vorbewegen einer Mutter 2. Mit einem weiteren Sensor 15 wird daher die Endstellung des Schiebers 9 überwacht und damit auch das ordnungsgemäße Zuführen der Muttern 2 von der Ladeposition 7 in die Schweißstation 3.

Die Erfindung wurde voranstehend an einem Ausführungsbeispiel beschrieben. Es versteht sich, dass zahlreiche Änderungen sowie Abwandlungen möglich sind, ohne dass dadurch der der Erfindung zugrundeliegende Erfindungsgedanke verlassen wird.

### Bezugszeichenliste

- 1: Vorrichtung
- 2: Mutter
- 3: Schweißstation
- 4: Versorgungsschlauch
- 4.1: Kanal im Versorgungsschlauch
- 5: Gehäuse
- 6: Führungskanal
- 6.1, 6.2, 6.3, 6.4: Kanalabschnitt
- 7: Ladeposition
- 8: Klinke
- 9: Schieber
- 10: Führung
- 10.1: Führungskanal
- 11: Anschluss
- 12: Kolben-Zylinder-Anordnung
- 13: Sensor
- 14: Einrichtung mit Schleusenfunktion

## Patentansprüche

1. System zum Einbringen oder Montieren von Muttern (2) in Werkstücke durch Verschweißen, mit einer Schweißstation (3), der die Muttern über eine Förderstrecke zugeführt werden, in welcher vor der Schweißstation (3) eine Ladevorrichtung (1) zum Laden der Schweißstation (3) mit jeweils einer Mutter (2) vorgesehen ist, wobei die Ladevorrichtung (1) eine Ladeposition (7) sowie einen Schieber (9) mit einer Schieberfläche (9.1) aufweist, mit der die jeweilige über einen Zuführkanal (6) der Ladeposition (7) zugeführte und dort positionierte Mutter in einem Arbeitshub des Schiebers (9) von der Ladeposition (7) an die Schweißposition (3) bewegt wird und die sich in einer Ausgangsposition des Schiebers (9) außerhalb des Zuführkanals (6) befindet,
**dadurch gekennzeichnet,**
**dass** zwischen der Ladevorrichtung (1) und der Schweißvorrichtung (3) ein Ladekanal (10.1) vorgesehen ist, durch den die Muttern von der Ladevorrichtung (1) an die Schweißstation (3) bewegt werden, und
**dass** der Schieber (2) oder dessen Schieberfläche (9.1) zum Vorbewegen einer Mutter von der von einem Abschnitt (6.1) des Zuführkanals (6) gebildeten Ladeposition (7) an die Schweißstation (3) in den Zuführkanal (6) hinein bewegbar ist.

2. System nach Anspruch 1, **dadurch gekennzeichnet, dass** der Ladekanal (10.1) und/oder der Schieber (9) aus einem elektrisch nicht leitenden Material und/oder aus einem nicht magnetisierbaren Material, beispielsweise aus Edelstahl bestehen,

3. System nach Anspruch 1 oder 2, **dadurch gekennzeichnet, dass** der Zuführkanal (6) bezogen auf die Achse der Bewegung des Schiebers (9) unter einem Winkel in die Ladeposition (7) oder einen diese Ladeposition bildenden Kanalabschnitt (6.1) mündet.

4. System nach einem der vorhergehenden Ansprüche, **dadurch gekennzeichnet, dass** der Schieber oder dessen Schieberfläche (9.1) zum Vorbewegen einer an der Ladeposition (7) bereitstehenden Mutter (2) über den Ladekanal (10.1) an die Schweißstation (3) in den Zuführkanal (6) hineinbewegbar ist.

5. System nach einem der vorhergehenden Ansprüche, **dadurch gekennzeichnet, dass** der Schieber (9) oder dessen Schieberfläche (9.1) zumindest in einer zweiten, senkrecht zur ersten Achsrichtung (X-Achse) verlaufenden Achse (Y-Achse, Z-Achse) bewegbar ist.

6. System nach einem der vorhergehenden Ansprüche, **dadurch gekennzeichnet, dass** der Schieber (9) zumindest auf einer Teillänge von einer Kolbenstange einer Kolben-Zylinder-Einheit (12) gebildet ist.

7. System nach einem der vorhergehenden Ansprüche, **dadurch gekennzeichnet, dass** wenigstens ein Sensor (13) an der Ladeposition und/oder wenigstens ein Sensor (15) zur Ermittlung wenigstens einer Endstellung des Schiebers (9) vorgesehen ist.

8. System nach einem der vorhergehenden Ansprüche, **dadurch gekennzeichnet, dass** das Gehäuse als flaches, rechteckförmiges Gehäuse ausgebildet ist.

9. System nach einem der vorhergehenden Ansprüche, **dadurch gekennzeichnet, dass** im Zuführkanal (6) Mittel (14) zum Vereinzeln der Muttern (2) vorgesehen sind.

10. System nach einem der vorhergehenden Ansprüche, **dadurch gekennzeichnet, dass** der Zuführkanal (6) über eine äußere, vorzugsweise flexible Zuführung (4) mit einer Versorgungseinheit für die Muttern (2) verbunden ist.

## Claims

1. System for inserting or fitting nuts (2) in workpieces by welding, with a welding station (3) to which the nuts are supplied over a conveyor path in which in front of the welding station (3) there is a loading device (1) for loading the welding station (3) with each relevant nut (2) wherein the loading device (1) has a loading position (7) as well as a slider (9) with a slide face (9.1) with which the relevant nut which is supplied via a supply channel (6) to the loading position (7) and positioned there is moved in a work stroke of the slider (9) from the loading position (7) to the welding position (3) and which is located in a starting position of the slider (9) outside of the supply channel (6) **characterised in that**
between the loading device (1) and the welding device (3) there is a loading channel (10.1) through which the nuts are moved from the loading device (1) to the welding station (3), and that the slider (9) or its slide face (9.1) can be moved into the supply channel (6) for moving a nut (2) from the loading position (7) formed by a section (6.1) of the supply channel (6) up to the welding station (3).

2. System according to claim 1 **characterised in that** the loading channel (10.1) and/or the slider (9) consist(s) of an electrically non-conducting material and/or of a non-magnetizable material, by way of example stainless steel.

3. System according to claim 1 or 2 **characterised in that** the supply channel (6) opens into the loading position (7) or a channel section (6.1) forming this loading position at an angle in relation to the axis of the movement of the slider (9).

4. System according to one of the preceding claims **characterised in that** the slider or its slide face (9.1) can be moved into the supply channel (6) for moving a nut (2) located on standby at the loading position (7) via the loading channel (10.1) up to the welding station (3).

5. System according to one of the preceding claims **characterised in that** the slider (9) or its slide face (9.1) is movable at least in a second axis (Y-axis, Z-axis) running perpendicular to the first axial direction (X-axis).

6. System according to one of the preceding claims **characterised in that** the slider (9) is formed over at least part of its length by a piston rod of a piston-cylinder unit (12).

7. System according to one of the preceding claims **characterised in that** at least one sensor (13) is provided at the loading position and/or at least one sensor (15) is provided for determining at least an end position of the slider (9).

8. System according to one of the preceding claims **characterised in that** the housing is formed as a flat rectangular housing.

9. System according to one of the preceding claims **characterised in that** means (14) are provided in the supply channel (6) for separating the nuts (2) individually.

10. System according to one of the preceding claims **characterised in that** the supply channel (6) is connected by an outer preferably flexible supply line (4) to a supply unit for the nuts (2).

## Revendications

1. Système pour poser ou monter des écrous (2) dans des pièces par soudage, avec un poste de soudage (3), auquel les écrous sont acheminés par le biais d'une voie de transport, dans laquelle un dispositif de chargement (1) pour charger le poste de soudage (3) avec un écrou respectif (2) est prévu devant le poste de soudage (3), dans lequel le dispositif de chargement (1) présente une position de chargement (7) ainsi qu'un poussoir (9) avec une surface de poussée (9.1), à l'aide de laquelle l' écrou respectif acheminé via un canal d'acheminement (6) à la position de chargement (7) où il est positionné est déplacé lors d'une course de travail du poussoir (9) de la position de chargement (7) à la position de soudage (3) et se trouve dans une position de sortie du poussoir (9) à l'extérieur du canal d'acheminement (6),
**caractérisé en ce que**
il est prévu entre le dispositif de chargement (1) et le
dispositif de soudage (3) un canal de chargement (10.1), à travers lequel les écrous sont déplacés du dispositif de chargement (1) au poste de soudage (3), et
le poussoir (9) ou sa surface de poussée (9.1) peut être
inséré(e) dans le canal d'acheminement (6) pour le déplacement préalable d'un écrou (2) de la position de chargement (7) formée par un segment (6.1) du canal d'acheminement (6) au poste de soudage (3).

2. Système selon la revendication 1, **caractérisé en ce que** le canal de chargement (10. 1) et/ou le poussoir (9) sont constitués d'un matériau électriquement non conducteur et/ou d'un matériau non magnétisable, par exemple d'acier fin.

3. Système selon la revendication 1 ou 2, **caractérisé en ce que** le canal d'acheminement (6) débouche sous un certain angle par rapport à l'axe du déplacement du poussoir (9) dans la position de chargement (7) ou dans un segment de canal (6.1) formant cette position de chargement.

4. Système selon l'une quelconque des revendications précédentes, **caractérisé en ce que** le poussoir ou sa surface de poussée (9.1) peut être inséré(e) dans le canald'acheminement (6) pour le déplacement préalable d'un écrou (2) à disposition en position de chargement (7) par le biais du canal de chargement (10.1) dans la position de soudage (3).

5. Système selon l'une quelconque des revendications précédentes, **caractérisé en ce que** le poussoir (9) ou sa surface de poussée (9.1) peut être déplacé(e) au moins sur un second axe (axe Y, axe Z) s'étendant perpendiculairement à la première direction axiale (axe X).

6. Système selon l'une quelconque des revendications, **caractérisé en ce que** le poussoir (9) est formé au moins sur une longueur partielle d'une tige de piston d'une unité de cylindre et piston (12).

7. Système selon l'une quelconque des revendications précédentes, **caractérisé en ce qu'**il est prévu au moins un capteur (13) dans la position de chargement et/ou au moins un capteur (15) pour déterminer au moins une position finale du poussoir (9).

8. Système selon l'une quelconque des revendications précédentes, **caractérisé en ce que** le boîtier se présente sous la forme d' un boîtier plat rectangulaire.

9. Système selon l'une quelconque des revendications précédentes, **caractérisé en ce que** des moyens (14) pour individualiser les écrous (2) sont prévus dans le canal d'acheminement (6).

10. Système selon l'une quelconque des revendications précédentes, **caractérisé en ce que** le canal d'acheminement (6) est relié par le biais d'une amenée externe (4), de préférence flexible, à une unité d'alimentation pour les écrous (2).
